# EUROPEAN PATENT APPLICATION

(11) **EP 2 887 275 A1**
(43) Date of publication of application: **24.06.2015**
(21) Application number: 13290323.8
(22) Date of filing: 20.12.2013
(51) Int. Cl.: G06N 3/12, G01J 3/46

(54) **Method and system for determining a color formula**

(71) Applicant: BASF Coatings GmbH, 48165 Münster (DE)
(72) Inventor: Bischoff, Guido, 48165 Münster (DE); Scarborough, Roger M., Luckey, OH 43443 (US); Fenoul, Frédéric, 80260 Allonville (FR); Delespierre, Benjamin, 60200 Compiègne (FR); Qiu, Jiqiong, 60200 Compiègne (FR)
(74) Representative: Hössle Patentanwälte Partnerschaft

(57) **Abstract**

The invention relates to a method to determine a formula for a sample color matching a target color, based on an obsolete color formula, based on a given range of tinting bases. According to the proposed method, a color prediction model is used to calculate a distance between respective color parameters of a candidate color formula and the color parameters of the target color, and a genetic algorithm is used to obtain the formula for the sample color out of a population of candidate color formulas, wherein a distance of respective color parameters of a candidate color formula of the population of candidate color formulas to the color parameters of the target color is minimized by the genetic algorithm by iterative steps of mutation/crossing-over and selection of candidate color formulas that fit best to a fitness criterion, until a pre-given stopping criterion is fulfilled which automatically leads to a candidate color formula which is kept as the sample color formula.

## Description

### Technical field

The present invention generally relates to an identification of formulas of colors and, more particularly, to a model-based approach involving a genetic algorithm used for identification of a color formula for a sample color matching a target color.

### Prior art

Many kinds of goods such as, for example, vehicles are painted in a wide area of colors. Modern colors have become more and more complex, since the number of components used for color composition is steadily increasing.

In the field of automotive refinish, color is a major quality factor. In order to optimize operating costs, a vehicle repairer has to prepare a paint with a correct or rather a best matching color as quick as possible. Therefore, formulas are used for mixing different primary ingredients called tinting bases in order to create a defined paint or a defined color. BASF provides large databases with colors and corresponding color formulas to its customers which have to be updated frequently.

Many reasons can induce a change in those color formulas, for example, new tinting bases may be launched on the market in order to make up for some pigment limitations. Some tinting bases may have to be replaced due to production stops or regulatory modifications. In some cases, it even might be necessary to switch from one painting line to another one, for example, in order to respect new regulations, or because it is more relevant to enter a new market with low cost brands than with premium ones. Due to an upcoming shortage of pigments, such events are becoming more and more frequent. Every time one or several tinting bases need to be replaced, databases including these tinting bases have to be updated in order to ensure a service continuity towards final customers.

As the number of concerned color formulas may be huge, it is not reasonable to perform a manual rematching for each color formula when one or several tinting bases have to be replaced. Thus, it is necessary to develop methods that are able to convert a large number of color formulas in new color formulas based on new tinting bases within a short time.

In the current state of the art, one possible color matching includes manual identification of tinting bases, such as, for example, effect pigments, by using a microscope for measuring color values of a standard paint. To identify a matching paint, i.e. a paint with the same color and the same or at least comparable characteristics, and which is made of different components, software is used to search databases of previous matches based on previous recollected data. If such a match is found, the respective color formula is mixed, sprayed and compared to the standard paint. Mostly, further color formula corrections have to be performed manually until the new paint and the standard paint suitably match together.

Depending on the case, some methods have been developed, but all of them have gaps which prevent them from being used as routine methods for all events that can occur with respect to changes in color formulas. When it is about changing from one paint line to another one, if large databases linking the color formulas and colors are existing for both paint lines, data mining and other statistical prediction models can be used to convert a color formula from a paint line to another one. However, the size of a database should be quite large, because of the complexity of the models that are necessary to reach a good prediction capability. Further, this kind of methodology cannot be applied when it is necessary to introduce a new tinting base, i.e. when an example that is not present in the learning database occurs. Further, when it is about replacing a tinting base by a new one, a study is generally led to compare the behaviour of both tinting bases when they are mixed with reference tinting bases such as black, white or aluminum. It is sometimes possible to define a coefficient to apply to the old color formula to get a new one with a new pigment with the same color. This coefficient may depend on the old tinting base concentration and an additional tinting base may also be required. In some cases, it is not possible to determine such a coefficient and a manual matching of all the color formulas has then to be considered.

These manual corrections are often time-consuming and ineffective. Years of training are required for a technician to learn how to perform these corrections. Therefore, software has been developed to support the technician by using neural network models for color matching as described, for example, in US 6,804,390 and US 6,714,924, respectively. Therein, neural networks are used for identification of matching formulas by using specific color values of a standard color. Since neural network models have to be trained on a specific data set, which should not be changed afterwards, these methods are limited in their ability to adapt to a change in underlying data.

Thus, it was an object of the present invention to provide a method that can also be applied efficiently when new tinting bases are to be introduced.

### Summary of the invention

In accordance with the teachings of the present invention, a method is provided to determine based on a given range of tinting bases a formula for a sample color matching a target color which is based on an obsolete color formula, the method comprising at least the following steps:
a) determining at least one intrinsic feature of the obsolete color formula based on at least one physical property;
b1) setting up a color prediction model for predicting color parameters of the at least one target color, based on a database between color parameters and formula intrinsic features and a mathematical model;
b2) linking the at least one determined intrinsic feature of the obsolete color formula via the mathematical model to defined color parameters of the color prediction model, thus obtaining color parameters of the at least one target color;
c) using the color prediction model to calculate a distance between respective color parameters of a candidate color and the color parameters of the at least one target color;
d) using a genetic algorithm to obtain the sample color formula out of a population of candidate color formulas, wherein a distance of respective color parameters of a candidate color formula of the population of candidate color formulas to the color parameters of the target color is minimized by the genetic algorithm by iterative steps of mutation/crossing over and selection of candidate color formulas that fit best to a fitness criterion, until a pre-given stopping criterion is fulfilled which automatically leads to a candidate color formula which is kept as the formula for the sample color.

Within the scope of the present disclosure, the terms "sample color formula", "converted color formula" and "formula for a/the sample color" are used synonymously.

Further measurements, i.e. distance measurements between colors are to be understood as respective measurements between the respective color parameters of the respective color formulas of the respective colors.

The proposed method provides an efficient possibility to assist a technician with the task to find a new color formula for a paint, i.e. a color which shows the same or almost the same characteristics as a specific target color, but which is based on different components or tinting bases. Thereby, first a color prediction model (CPM) is set up by using general or intrinsic features of different color formulas and a mathematical model to convert these intrinsic features into color parameters that are suitable for calculating respective distances between different color formulas of different colors. As the respective color formulas of some of those colors are known while others are unknown, a successive approach to an unknown color formula is possible by evaluating successively distances between respective colors, i.e. color formulas via the respective color parameters using the color prediction model. These intrinsic features should be chosen with respect to the fact that they can be extracted unaltered from a color formula even if a new ingredient is proposed for mixing the paint according to the respective color formula. Good candidates for such intrinsic features may be physical variables such as scattering coefficient or absorption coefficient. A combination or a calculation based on these physical variables could be suitable as well.

As soon as the CPM is set up, it can be used to evaluate relative distances between the obsolete color formula and other colors or color formulas. A successive approach to the target color can then be obtained by performing steps of mutation/crossing-over and selection for a population of candidate color formulas, wherein each candidate color formula is evaluated by determining the distance of its respective color parameters to those of the target color derived via the color prediction model.

In the context of the present invention the obsolete color formula is to be understood as the color formula for the target color. Due to given circumstances, such as new ingredients, this target color formula has to be replaced by a new color formula, i.e. the desired sample color formula.

In the context of the present invention the sample color formula is a formula that can be used to create, i.e. to mix a color that matches the target color in its color parameters at its best.

In the context of the present invention, a candidate color formula is a formula that is used by a genetic algorithm to obtain a formula for a sample color out of at least one population of candidate color formulas by using the steps of mutation/crossing-over and selection, as further described below.

According to a further embodiment of the present method, the intrinsic features may be a scattering coefficient and/or an absorption coefficient.

Based on these intrinsic features, a respective CPM is built by using a mathematical model, such as the Kubelka-Munk two flux model, for example.

According to a further embodiment of the present invention, a statistical method is applied to a database linking color parameters and color formulas, thus serving as the color prediction model. The statistical method may be linear regression, PLS regression, supervised learning methods, k-nearest neighbours and unsupervised learning methods.

As soon as the CPM is built, it can be used to calculate, i.e. to predict relevant color parameters for different color formulas with respective different instrinsic features. Thus, the CPM provides appropriate color parameters for respective values of the intrinsic features and thereby for each color formula appropriate color parameters.

According to another embodiment of the present invention, reflectance curve values measured by a spectrocolorimeter are used as color parameters.

Even though a wide area of color parameters could be used, reflectance curve values are very common for describing a color and to deal with effects of colors such as, for example, to decide what color balancing should be done for taking a photo. Thus, the color parameters should be able to describe a difference between different colors or color formulas in a mathematical way. To overcome the limitations of chromaticity diagrams, the International Commission on Illumination CIE recommended two alternate uniform color scales, namely (L,a,b) or CIELAB and CIELCH (L,C,h°). When a color is expressed in CIELAB, "L" defines lightness, "a" denotes the red/green value and "b" the yellow/blue value. While CIELAB uses Cartesian coordinates to calculate a color in a color space, CIELCH uses polar coordinates, wherein "L" defines lightness, "C" specifies chroma and "h°" denotes the hue angle, an angular measurement.

As soon as the CPM provides results of a calculation of color parameters of a candidate color formula, it becomes possible to calculate a relative distance of the color parameters of this candidate color formula to the color parameters of the obsolete color formula. Since the color parameters are derived from the intrinsic features, this relative distance is also an expression of a difference of the obsolete color formula and the candidate color formula according to general features. Using CPM, every formula, such as a candidate color formula can be transformed in a set of color parameters whose relative distance to the respective color parameters of the obsolete color formula can be calculated.

Based on the relative distance of the color parameters of a candidate color formula to those of the obsolete color formula, an objective criterion in form of a threshold can be used to decide whether a candidate color formula is close enough to the obsolete color formula and, therefore, suitable for being used as a converted color formula, i.e. the formula for the sample color matching the target color in a respective paint, or if the relative distance of a candidate color formula is too large and the candidate color formula, therefore, is not suitable for replacing the obsolete color formula. Thus, finding a satisfying sample color formula becomes a task that can be solved by a machine learning approach such as, for example, a genetic algorithm or a so-called optimization under constraint problem.

Since a genetic algorithm is an unsupervised method, no time-consuming training on a specific dataset is needed at all. Thus, these kinds of algorithms are not limited to a structure of a set of training data, which enables the use of new ingredients such as new tinting bases at any time without need to update the underlying algorithm.

Of course, it is also possible to avoid ingredients that are not available anymore. Finding a formula for a sample color that matches the target color by using a genetic algorithm is then about finding a formula within a minimal relative distance to the obsolete color formula.

In order to solve the mentioned optimization under constraint problem by finding a suitable sample color formula via a genetic algorithm, first a population of candidate color formulas has to be proposed. A population of candidate color formulas consists of at least one candidate color formula.

In an embodiment of the present invention, a starting population of candidate color formulas is proposed randomly.

Randomized proposals of candidate color formulas can be conducted automatically without any need of a technician or a supervisor. Since such a randomized approach may start at a candidate color formula with a very large distance to the obsolete color formula, the respective process and, therefore, computational time may become long.

In another embodiment of the present invention, the starting population of candidate color formulas is proposed based on expert knowledge.

If, for example, the technician provides a correct pigmentation, the task could be solved much faster than by proposing a randomized candidate color formula, since the respective distance between the candidate color formulas of the starting population and the obsolete color formula are already minimized by the expert knowledge.

Based on the starting population of candidate color formulas which are proposed by a technician, by an algorithm, or by any other suitable method, the genetic algorithm generates a population of modified candidate color formulas by changing respective amounts and numbers of at least one ingredient comprised by each candidate color formula such as, for example, a tinting base. Each member of this population of candidate color formulas is evaluated by the relative distance of its color parameters to the color parameters of the obsolete color formula which is calculated by using the CPM. Best candidate color formulas are selected according to a fitness criterion and used to create a second population of candidate color formulas by crossing-over and/or mutation. The steps of mutation and crossing-over are used to change the number and amount of ingredients of each candidate color formula and to share or exchange components of candidate color formulas within a population of candidate color formulas, respectively. After execution of mutation and crossing-over, each member of a population of candidate color formulas is evaluated by a selection step, according to a fitness criterion which has to be provided by e.g. a technician with respect to the respective distance of the candidate color formulas to the obsolete color formula. This procedure may be executed in iterative steps n-times, until either a candidate color formula matches the target color and, therefore, becomes the sample color formula, i.e. the converted color formula, or another stopping criterion is fulfilled.

This stopping criterion is given, for example, by a distance threshold wherein, if respective color parameters of a candidate color formula are closer to the color parameters of the obsolete color formula than the distance threshold, the corresponding candidate color formula is kept as the sample color formula, i.e. the converted color formula.

This threshold may be set by the technician or by the genetic algorithm itself. Since this threshold affects a quality of a matching between a candidate color formula and a obsolete color formula in their physical characteristics, it should be chosen with care.

The evaluation and selection steps are iterated n-times by the genetic algorithm. By iterations of mutation/crossing-over and selection, single features of distinct candidate color formulas may be composed in one candidate color formula which may lead to a decreased relative distance to the obsolete color formula. Thus, more iterations within the genetic algorithm will help to achieve a more precise matching of the obsolete color formula and the finally resulting converted color formula or sample color, respectively.

In another embodiment of the present method, the genetic algorithm stops as soon as a settled maximum number of iterations is executed such that if after this number of iterations none of the candidate color formulas has a distance to the obsolete color formula below a pre-defined distance threshold, the candidate color formula with the smallest distance to the obsolete target color formula is kept as the color formula for the sample color.

In the context of the present invention the distance between a candidate color formula and the obsolete target color formula means a distance of their respective color parameters according to the CPM.

As the evaluation may depend strongly on the proposed starting population of candidate color formulas, repeating the whole process several times based on different proposed candidate color formulas may increase the probability to find a formula with a good fitness, i.e. with an ability for minimizing a relative distance to the obsolete color formula.

It is also possible to propose a population of candidate color formulas by, for example, a computer-readable medium which can be used by the genetic algorithm to load a starting population.

The present method can be used for, but is not limited to color formula correction matching from scratch, i.e. without any pre-knowledge, pigment identification, selection of targets for color tools, searching existing formulas for the closest match to a target color, identification of formula mistakes, development of color tolerances and enhancing conversion routines.

The present invention further refers to a color matching system for determining a sample color formula, wherein the apparatus comprises at least means for calculation of at least a color prediction model and a genetic algorithm as used by the proposed method.

In an embodiment of the present invention, the color matching system may comprise a computing unit to compute the color prediction model and the genetic algorithm. The computing unit may also be used for entering pre-knowledge by an expert such as a list of tinting bases that can be used by the genetic algorithm to build a population of candidate color formulas.

In another embodiment of the present invention, the color matching system may also be used for a conversion of a known obsolete color formula into a sample color formula leading to the same or almost the same color but which is mixed based on different ingredients, i.e. different tinting bases, compared to the obsolete target color formula.

In another embodiment of the present invention, the color matching system further comprises: an input device for entering an initial color formula or a color, such as for example a scanner; and means for mixing a paint according to the entered color formula, wherein the mixing means are connected to a respective compartment of a number of tinting bases.

A direct connection of the computing unit of the color matching system to means for mixing a paint and an associated connection to a respective compartment enables a user of the color matching system to apply a painting sample, i.e. a target color or target color formula at an input device such as a scanner or a similar device which analyses the sample and sends respective color parameters to the computing unit which then calculates according to the proposed method a sample color formula for a sample color which matches the target color at its best within the bounds of pre-given constraints. After the calculation of the matching sample color formula is done, the sample color formula is sent to the means for mixing a respective paint. These paint mixing means collect tinting bases from a respective compartment according to the formula of the sample color obtained by the genetic algorithm and mix them up to a paint of the sample color matching the target color. The paint is now ready to be used by a technician.

Additional advantages and aspects of the present invention will become apparent from the subsequent description and the appended claims, taken in conjunction with the accompanying drawings.

### Brief description of the drawings

- Figure 1: shows a flow chart of an embodiment of the proposed method.
- Figure 2: shows another flow chart of another embodiment of the method according to the present invention.
- Figure 3: shows a possible assembly of an embodiment of the color matching system according to the invention.

The invention is diagrammatically illustrated in the drawings by means of embodiments by way of example, and is hereinafter explained in detail with reference to the drawings. It is to be understood that the description is in no way limiting on the scope of the present invention and is merely an illustration of embodiments of the invention.

### Description of embodiments

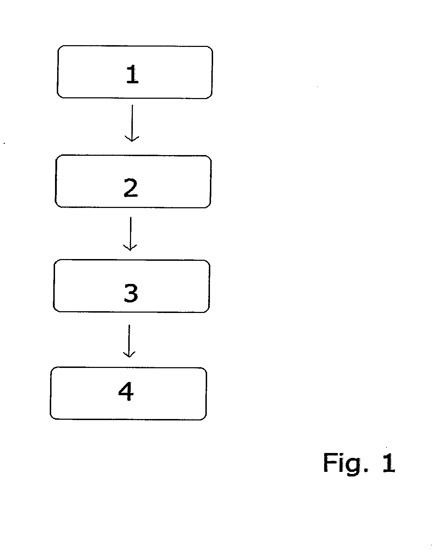

Figure 1 shows a scheme for determination of a sample color formula composed of a defined set of ingredients, i.e. tinting bases, which matches a target color based on an obsolete target color formula.

The target color formula, i.e. the obsolete color formula, has to be provided by a standard method like for example a database.

In step 1, intrinsic features have to be specified by a technician, for example. Good candidates for such intrinsic features are physical variables such as scattering coefficient and/or absorption coefficient. These intrinsic features can be calculated or extracted from a color formula even if one or more new ingredients, such as tinting bases, are proposed. Any combination of these coefficients could also be considered.

In step 2, a color prediction model (CPM) is set up based on the previously defined and determined intrinsic features. This CPM is used to predict color parameters from the intrinsic features. Thus, the CPM uses a color formula and a mathematical model to obtain color parameters in form of uniform color scale values out of the intrinsic features according to a three dimensional CIELAB value, wherein "L" defines lightness, "a" denotes the red/green value and "b" the yellow/blue value.

As soon as the CPM has calculated the color parameters of the obsolete color formula, a position of the obsolete color formula in a three dimensional color space (CIELAB) is known. Starting from this position, a distance can be calculated to any other color formula, i.e. their respective colors in CIELAB. Thus, relative distances between any color formulas can be calculated for the three dimensions lightness, red/green value and yellow/blue value.

Since CPM can be used to calculate the distance of a candidate color formula to the obsolete color formula, an objective measurement of a matching between the color of the respective candidate color formula and the obsolete color formula becomes possible in the three dimensions mentioned before.

In step 3, a starting population of candidate color formulas is chosen and for each candidate color formula, its respective distance to the target color or the obsolete color formula is calculated. Thus, the candidate color formulas can be evaluated for being relatively good or bad matching, which enables an improvement towards the goal of matching color parameters, for example, by changing the respective color formula of the candidate color formulas successively.

In step 4, a machine learning approach is used to perform an automatic modification of respective candidate color formulas based on a genetic approach. So-called genetic algorithms create a population of candidate color formulas based on a provided pre-knowledge of the target color provided by a technician, for example. This pre-knowledge may be a correct pigmentation of the obsolete color formula. Starting from this pre-knowledge, the genetic algorithm modifies the candidate color formulas that fit best to a fitness criterion, i.e. the candidate color formulas showing the smallest distance to the obsolete color formula, derived by steps of mutation and crossing-over, hence, by exchanging information between individual candidate color formulas in order to find a matching sample color. As soon as a sample color is found that has a distance close enough, i.e. within a pre-defined tolerance or a distance threshold, to the color parameters of the obsolete color formula, the algorithm is finished and the respective candidate color formula matching best the target color is found as the converted color formula. Since the setting up of a starting population of candidate color formulas can be limited in its ingredients, this process can be used to obtain a sample color formula that matches a target color by using a pre-defined set of ingredients, wherein special ingredients which are comprised by the obsolete color formula may be missing.

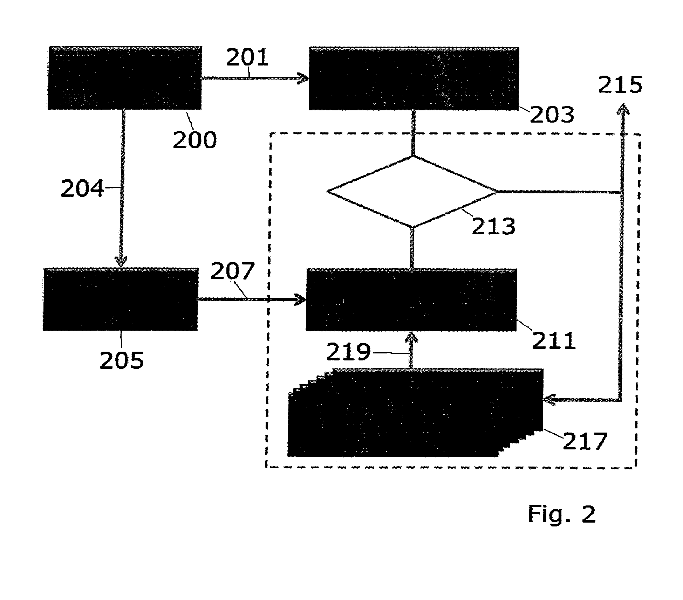

In Figure 2, starting from an obsolete (old) color formula 200 which has to be converted, a CPM is set up to gain color parameters of a target color 203 of the obsolete (old) color formula 200, as indicated by arrow 201. Further, based on expert knowledge 204 derived by a technician, a starting color formula 205, i.e. a first candidate color formula, is created which serves as a starting point to gain a candidate color 211, i.e. respective color parameters, via the CPM, as indicated by arrow 207. In a matching procedure 213 based on a genetic algorithm, a matching of target color 203 and candidate color 211 is performed. If target color 203 and candidate color 211 match in a suitable way, i.e. their relative distance is within pre-defined conditions, a converted color formula 215 is found. Otherwise a new matching between target color 203 and a new candidate color 211 has to be performed based on a new candidate color formula out of a set of candidate color formulas 217, as indicated by arrow 219, derived by the genetic algorithm by another iterative step of selection via a fitness criterion and mutation/crossing-over to change a number and an amount of ingredients of each candidate color formula of the set of candidate color formulas 217.

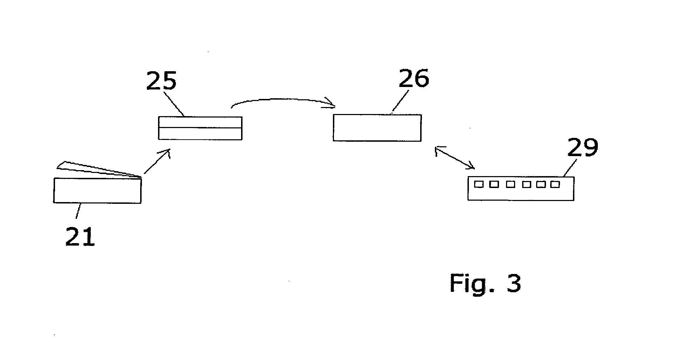

Figure 3 shows an automatic color matching system, wherein a technician only has to provide a target color of an obsolete target color formula on a scanner 21 in order to finally create a matching sample color out of a pre-defined set of ingredients stored in a respective compartment 29.

As soon as a calculation unit 25, which is used to perform the genetic algorithm, calculates the converted color formula, as described above, particularly in the context of Figure 2, the paint mixing means start to mix a paint according to the converted color formula that matches the target color, by acquiring tinting bases from compartment 29.

The technician only needs to update the compartment 29 and/or its database, respectively, without any need for experimentation or time-consuming manual rematching of color formulas. Since the genetic algorithm is based on iterative steps, this manually rematching can be simulated and performed automatically.

## Claims

1. Method to determine a formula for a sample color matching a target color, based on an obsolete color formula, based on a given range of tinting bases, the method comprising at least the following steps:
a) determining at least one intrinsic feature of the obsolete color formula based on at least one physical property of the target color;
b) linking the at least one determined intrinsic feature of the obsolete color formula via a mathematical model to defined color parameters of a color prediction model, thus obtaining color parameters of the target color, the color prediction model being set up based on a given database between color parameters and formula intrinsic features and the mathematical model;
c) using the color prediction model to calculate a distance between respective color parameters of a candidate color formula and the color parameters of the target color;
d) using a genetic algorithm to obtain the formula for the sample color out of a population of candidate color formulas by repeating step c), wherein a distance of respective color parameters of a candidate color formula of the population of candidate color formulas to the color parameters of the target color is minimized by the genetic algorithm by iterative steps of mutation/crossing-over and selection of candidate color formulas that fit best to a fitness criterion, until a pre-given stopping criterion is fulfilled which automatically leads to a candidate color formula which is kept as the sample color formula.

2. Method according to claim 1, wherein the population of candidate color formulas is generated randomly.

3. Method according to claim 1, wherein the population of candidate color formulas is generated with respect to provided expert knowledge.

4. Method according to any one of the preceding claims, wherein the stopping criterion is given by a distance threshold wherein, if respective color parameters of a candidate color formula are closer to the color parameters of the target color than the distance threshold, the corresponding candidate color formula is kept as the sample color formula.

5. Method according to any one of the preceding claims, wherein the stopping criterion is given by a settled maximum number of iterations such that, if after this number of iterations none of the candidate color formulas has a distance below a pre-defined distance threshold, the candidate color formula with the smallest distance is kept as the sample color formula.

6. Method according to any one of the preceding claims, wherein the mathematical model is based on Kubelka-Munk two flux model.

7. The method according to any one of the preceding claims wherein a statistical method is applied to the database linking color parameters and color formulas, thus serving as the color prediction model.

8. The method according to claim 7 wherein the statistical method is chosen from a list comprising at least linear regression, PLS regression, supervised learning methods and k-nearest neighbors.

9. Method according to any one of the preceding claims, wherein a scattering coefficient and/or an absorption coefficient are chosen as the at least one intrinsic feature of the target color.

10. Method according to claim 9, wherein any combination or calculation based on the scattering coefficient and/or the absorption coefficient can be considered as the at least one intrinsic feature of the target color.

11. Method according to any one of preceding claims, wherein reflectance curve values measured by a spectrocolorimeter are used as color parameters.

12. Method according to any one of the preceding claims, wherein each candidate color formula of the population of candidate color formulas derived by the genetic algorithm is evaluated by the distance of its color parameters to the color parameters of the obsolete color formula through the color prediction model.

13. Method according to claim 12, wherein the evaluation is iterated n-times.

14. A computer program for performing a method according to any one of claims 1 to 13, wherein the computer program is stored on a computer-readable medium.

15. A color matching system for determining a sample color formula, wherein the system comprises at least calculation means for providing a color prediction model and a genetic algorithm as used by the method according to any one of claims 1 to 13.
